# EUROPEAN PATENT APPLICATION

(11) **EP 4 749 701 A1**
(43) Date of publication of application: **27.05.2026**
(21) Application number: 24845519.8
(22) Date of filing: 18.07.2024
(51) Int. Cl.: H01M 4/06, H01M 4/46, H01M 4/50, H01M 4/58, H01M 6/16

(54) **LITHIUM PRIMARY BATTERY**

(30) Priority: 21.07.2023 JP 2023119394
(71) Applicant: Panasonic Intellectual Property Management Co., Ltd., Kadoma-shi, Osaka 571-0057 (JP)
(72) Inventor: SAITO, Kohei, Kadoma-shi Osaka 571-0057 (JP); TAKEUCHI, Masanobu, Kadoma-shi Osaka 571-0057 (JP)
(74) Representative: Eisenführ Speiser
(86) International application number: PCT/JP2024/025786
(87) International publication number: WO 2025/023141

(57) **Abstract**

A lithium primary battery includes a positive electrode, a negative electrode, and a nonaqueous electrolyte solution. The positive electrode includes a positive electrode mixture. The positive electrode mixture includes LiₓMnO₂ where 0 ≤ x ≤ 0.05, and a sulfate. The amount of sulfur atoms contained in the positive electrode mixture is 1.6 parts by mass or less per 100 parts by mass of manganese atoms contained in the positive electrode mixture. The negative electrode includes an alloy containing lithium and magnesium. The content of the lithium in the alloy is more than 88 mass%, and the content of the magnesium in the alloy is 0.01 mass% or more and 10 mass% or less.

## Description

### [Technical Field]

The present disclosure relates to a lithium primary battery.

### [Background Art]

Lithium primary batteries have high energy density and low self-discharge, and are therefore used as power sources for many electronic devices. For a positive electrode of lithium primary batteries, manganese dioxide and the like are used. For a negative electrode of lithium primary batteries, for example, lithium metal or lithium alloy in the form of sheet (foil) is used.

Patent Literature 1 proposes "a lithium negative electrode for use in a lithium-organic electrolyte battery including an electrolyte containing a lithium salt dissolved therein, and a separator disposed so as to face the negative electrode, in which a lithium body laminated with a coating layer of initially an aluminum-magnesium alloy on a surface adjacent to the separator is used as the negative electrode, the lithium negative electrode being configured such that an aluminum-magnesium-lithium ternary alloy is formed through diffusion, to increase the negative electrode surface area and improve the pulse performance of the battery."

Patent Literature 2 discloses a manganese dioxide containing sulfate radical (Claim 2).

### [Citation List]

### [Patent Literature]

Patent Literature 1: Japanese Laid-Open Patent Publication No. S58-209862
Patent Literature 2: Japanese Laid-Open Patent Publication No. 2005-038839

### [Summary of Invention]

### [Technical Problem]

In a lithium primary battery, the internal resistance may increase after its long-term storage, causing degradation in discharge characteristics in some cases.

### [Solution to Problem]

One aspect of the present disclosure relates to a lithium primary battery, including: a positive electrode, a negative electrode, and a nonaqueous electrolyte solution, wherein, the positive electrode includes a positive electrode mixture, the positive electrode mixture includes LiₓMnO₂ where 0 ≤ x ≤ 0.05, and a sulfate, an amount of sulfur atoms contained in the positive electrode mixture is 1.6 parts by mass or less per 100 parts by mass of manganese atoms contained in the positive electrode mixture, the negative electrode includes an alloy containing lithium and magnesium, a content of the lithium in the alloy is more than 88 mass%, and a content of the magnesium in the alloy is 0.01 mass% or more and 10 mass% or less.

### [Advantageous Effects of Invention]

According to the present disclosure, it is possible to suppress the degradation in discharge characteristics after long-term storage of a lithium primary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

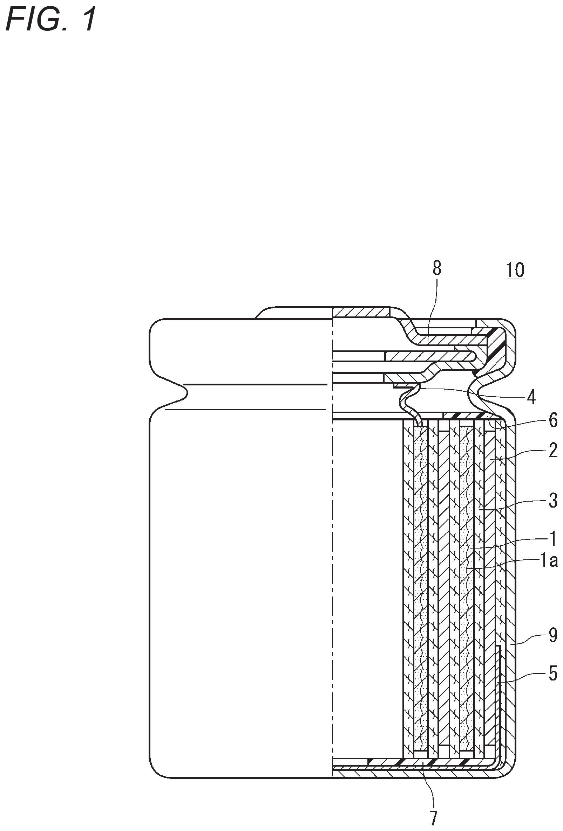

[FIG. 1] A front view, partially in sectional, of a lithium primary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less". In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

A lithium primary battery according to an embodiment of the present disclosure includes a positive electrode, a negative electrode, and a nonaqueous electrolyte solution. The positive electrode includes a positive electrode mixture, and the positive electrode mixture includes LiₓMnO₂ where 0 ≤ x ≤ 0.05 as a positive electrode active material, and a sulfate. The amount of sulfur atoms (S) contained in the positive electrode mixture is 1.6 parts by mass or less per 100 parts by mass of manganese atoms (Mn) contained in the positive electrode mixture. The negative electrode includes a lithium alloy. The lithium alloy contains more than 88 mass% of lithium (Li), and 0.01 mass% or more and 10 mass% or less of magnesium (Mg).

When the above configuration is satisfied, the increase of internal resistance after long-term storage, and the deterioration in discharge characteristics (storage characteristics) associated therewith are suppressed. For example, the voltage drop during low-temperature pulse discharge after storage is suppressed.

Although not yet clear, the detailed mechanism thereof is presumed as follows. The sulfate contained in the positive electrode mixture leaches from the positive electrode during long-term storage, and deposits on the negative electrode. Due to the contact between the negative electrode and the nonaqueous electrolyte solution, a coating film is formed on the negative electrode surface, into which a sulfate-derived component (sulfate ions) is incorporated. At this time, if the dispersibility of the sulfate ions in the coating film is low, the Li ions can hardly move within the coating film, causing the negative electrode resistance to increase in some cases. On the other hand, when the negative electrode (Li alloy) contains Mg, some interaction occurs between the Mg and the sulfate ions, to improve the dispersibility of the sulfate ions in the coating film, and suppress the above increase of the negative electrode resistance. Presumably, favorable dispersibility of Mg is involved in the above interaction.

If the amount of sulfur atoms in the positive electrode mixture is more than 1.6 parts by mass per 100 parts by mass of manganese atoms in the positive electrode mixture, the sulfate-derived component will be excessively contained in the coating film, and because of this, even though Mg is contained in the negative electrode, the negative electrode resistance may increase during storage, causing the discharge characteristics to deteriorate in some cases. If the Mg content in the lithium alloy is less than 0.01 mass%, the effect by containing Mg in the negative electrode is reduced, and the negative electrode resistance may increase during storage, causing the discharge characteristics to deteriorate in some cases.

If the Li content in the lithium alloy is 88 mass% or less, the proportion of Li in the negative electrode decreases, which increases the negative electrode resistance, causing the discharge characteristics to deteriorate in some cases. If the Mg content in the lithium alloy is more than 10 mass%, the proportion of Mg in the negative electrode increases, which increases the negative electrode resistance, causing the discharge characteristics to deteriorate in some cases.

The sulfur atoms are derived from the sulfate (sulfate ions). The sulfate (sulfate ions) is contained in manganese dioxide, which will be described in detail later. Most or all of the manganese atoms are derived from LiₓMnO₂. There is a case where a small part of the manganese atoms is contained in the form of manganese sulfate in the sulfate.

The amount of sulfur atoms contained in the positive electrode mixture may be 0.25 parts by mass or more (or 0.5 parts by mass or more) and 1.6 parts by mass or less per 100 parts by mass of manganese atoms contained in the positive electrode mixture. When the amount of sulfur atoms is large within the above range, the storage characteristics tend to deteriorate, so that the improvement effect of the storage characteristics by the addition of Mg to the lithium alloy can be remarkable. Since the storage characteristics can be improved by adding Mg to the lithium alloy when the amount of sulfur atoms contained in the positive electrode mixture is large within the above range, it is possible to attempt the reduction of the number of manufacturing processes by simplifying the cleaning treatment as described later, the reduction of cleaning costs, the alleviation of environmental impact, etc.

The above amount (parts by mass) of sulfur atoms contained in the positive electrode mixture can be determined as follows.

An initial battery (e.g., an unused battery immediately after production or within one week after purchase) is disassembled, to take out the positive electrode mixture, which is then dissolved in an acid solution (hydrochloric acid, etc.), followed by separation of the insoluble matter through filtration, centrifugation, or the like, to obtain a sample solution. A S amount WS (mass%) and a Mn amount WMn (mass%) in the sample solution are each measured using inductively coupled plasma (ICP) atomic emission spectroscopy, to calculate (WS/WMn)×100 as the above amount (parts by mass) of sulfur atoms. For the measurement instrument, for example, "iCAP7400 Duo" manufactured by Thermo Fisher Scientific Inc. can be used.

### (Lithium alloy)

From the viewpoint of reducing the internal resistance and ensuring the capacity, the Li content in the lithium alloy is more than 88 mass%, may be 89 mass% or more or 90 mass% or more, and may be 95 mass% or more. From the viewpoint of suppressing the deterioration in storage characteristics, the Mg content in the lithium alloy is 0.01 mass% or more and 10 mass% or less.

From the viewpoint of improving the storage characteristics, the lithium alloy preferably further contains Al. Hereinafter, a lithium alloy containing Mg and being substantially free of A1 will be sometimes referred to as a "Li-Mg alloy". A lithium alloy containing Mg and Al will be sometimes referred to as a "Li-Mg-Al alloy". Note that "being substantially free" means that it is below the detection limit in a compositional analysis of the lithium alloy (e.g., ICP atomic emission spectroscopy, atomic absorption spectroscopy, etc.).

Adding Al can suppress the increase of internal resistance during storage (long-term use), whereas Al is apt to segregate in Li. On the other hand, Mg has excellent dispersibility in Li. When the lithium alloy contains both Mg and Al, the good dispersibility of Mg can suppress the segregation of Al, and the non-uniform consumption of Li due to segregation of Al can be suppressed. In this case, the effects by Mg and Al are stably obtained throughout the negative electrode, and Li is uniformly consumed on the negative electrode surface, so that the proportion of the Li that can contribute to the discharge reaction in the end stage of discharge can be further increased. When Al is contained together with Mg, a coating film with low resistance is likely to be formed stably, and the voltage in the end stage of discharge is further increased. In addition, the deterioration in storage characteristics can be further suppressed.

From the viewpoint of suppressing the deterioration in storage characteristics, the Mg content in the lithium alloy is 0.01 mass% or more, preferably 0.05 mass% or more, more preferably 0.1 mass% or 0.2 mass% or more. From the viewpoint of reducing the negative electrode resistance, the Mg content in the lithium alloy is 10 mass% or less, preferably 8 mass% or less, more preferably 7 mass% or less, or 5 mass% or less. The range of the Mg content in the lithium alloy may be, for example, 0.2 mass% or more and 10 mass% or less, and may be 1 mass% or more and 5 mass% or less. Note that the above Mg content in the lithium alloy refers to the Mg content in a Li-Mg alloy or a Li-Mg-Al alloy.

From the viewpoint of suppressing the deterioration in storage characteristics, the Al content in the lithium alloy (Li-Mg-Al alloy) is preferably 0.01 mass% or more (or 0.1 mass% or more) and 5 mass% or less, more preferably 1 mass% or more and 2 mass% or less. From a similar viewpoint, the total content of Mg and Al in the Li-Mg-Al alloy is preferably 0.02 mass% or more and 10 mass% or less. The molar ratio Mg/Al of Mg to Al may be in the range of, for example, 0.02 or more and 3 or less.

The lithium alloy may contain other metal elements except Li, Mg, and Al. Examples of other metal elements include Sn, Ni, Pb, In, Na, K, and Ca.

The composition of the lithium alloy can be determined by inductively coupled plasma (ICP) atomic emission spectroscopy or atomic absorption spectroscopy (AAS).

A detailed description will be given below of the lithium primary battery of the present disclosure.

### [Lithium primary battery]

### (Positive electrode)

The positive electrode contains a positive electrode mixture. The positive electrode mixture contains a positive electrode active material. The positive electrode active material contained in the positive electrode mixture may be, for example, manganese dioxide. The positive electrode containing manganese dioxide exhibits relatively high voltage and is excellent in pulse discharge characteristics. The manganese dioxide may be in a mixed crystal state containing multiple crystalline states. The positive electrode may contain a manganese oxide other than manganese dioxide. Examples of the manganese oxide other than manganese dioxide include MnO, Mn₃O₄, Mn₂O₃, and Mn₂O₇. Preferably, the manganese dioxide is a major component of the manganese oxide contained in the positive electrode.

The manganese dioxide contained in the positive electrode may be doped with a small amount of lithium. When the amount of doped lithium is small, high capacity can be ensured. The manganese dioxide and the manganese dioxide doped with a small amount of lithium can be represented by LiₓMnO₂ where 0 ≤ x ≤ 0.05. It suffices when the average composition of the manganese oxide contained in the positive electrode is LiₓMnO₂ where 0 ≤ x ≤ 0.05. Here, the ratio x of Li may be 0.05 or less when the lithium primary battery is in the early stage of discharge. In general, the ratio x of Li increases as the discharge of the lithium primary battery proceeds. The oxidation number of the manganese contained in manganese dioxide is theoretically four. However, when another manganese oxide is contained in the positive electrode or the manganese dioxide is doped with lithium, the oxidation number of the manganese may somewhat increase or decrease from four. Therefore, in the LiₓMnO₂, it is permissible that the average oxidation number of the manganese somewhat increases or decreases from four.

The positive electrode can contain, in addition to the LiₓMnO₂, other positive electrode active materials as used in a lithium primary battery. Examples of other positive electrode active materials include fluorinated graphite. The proportion of the LiₓMnO₂ in the total mass of the positive electrode active material is preferably 90 mass% or more.

As the manganese dioxide, an electrolytic manganese dioxide is preferably used. An electrolytic manganese dioxide having been subjected to at least one of neutralization treatment, cleaning treatment, and firing treatment, as necessary, may be used.

The electrolytic manganese dioxide is typically obtained through electrolysis of an aqueous solution of manganese sulfate. Therefore, sulfate ions (sulfate) are inevitably contained in the electrolytic manganese dioxide. In a positive electrode material mixture prepared using such an electrolytic manganese dioxide, sulfur atoms are inevitably contained. When the amount of sulfate ions contained in the electrolytic manganese dioxide is 3 mass% or less, the amount of sulfur atoms contained in the positive electrode mixture is 1.6 parts by mass or less per 100 parts by mass of manganese atoms contained in the positive electrode mixture.

The amount of sulfate ions (SO₄²⁻) contained in the electrolytic manganese dioxide can be determined as follows.

A mass W1 of the electrolytic manganese dioxide is measured. Then, the electrolytic manganese dioxide is dissolved in an acid solution (e.g., hydrochloric acid), to obtain a sample solution. The S amount in the sample solution is measured using ICP atomic emission spectroscopy, which is converted to the amount of sulfate ions, assuming that S is totally sulfate ions, to determine a mass W2 of sulfate ions. Then, (W2/W1) × 100 is calculated as the amount of sulfate ions contained in electrolytic manganese dioxide.

In the electrolytic manganese dioxide, a metal component other than Mn (hereinafter may be referred to as a "metal Me") derived from the raw material or the material used in the cleaning treatment may remain in some cases, and the storage characteristics may deteriorate due to the remaining of the metal Me. Examples of the metal Me include sodium, potassium, and calcium. On the other hand, adding Mg to the negative electrode (lithium alloy) can suppress the deterioration in storage characteristics due to the remaining of the metal Me. The above effect by the addition of Mg can be obtained when the total amount of metal Me atoms (total amount of Na, K, and Ca) contained in the positive electrode mixture is 0.5 parts by mass or less per 100 parts by mass of manganese atoms contained in the positive electrode mixture. The above total amount of metal Me atoms can be determined by ICP atomic emission spectroscopy in the same manner as above.

Although not yet clear, the detailed mechanism thereof is presumed as follows. When the metal Me remains in the electrolytic manganese dioxide, the metal Me contained in the positive electrode mixture dissolves into the nonaqueous electrolyte solution during long-term storage, and deposits on the negative electrode, so that the metal Me is incorporated into the coating film on the negative electrode surface. At this time, if the dispersibility of the metal Me in the coating film is low, Li ions become difficult to move within the coating film, which may result in increased negative electrode resistance. On the other hand, when the negative electrode (lithium alloy) contains Mg, the dispersibility of the metal Me contained in the coating film is enhanced, and the above increase of negative electrode resistance can be suppressed.

It is desirable to remove the metal Me as much as possible by the cleaning treatment. However, the deterioration in storage characteristics due to the remaining of the metal Me can be suppressed by adding Mg to the lithium alloy. It is therefore possible to attempt the reduction of the number of manufacturing processes by simplifying the cleaning treatment, the reduction of cleaning costs, the alleviation of environmental impact, etc.

The ratios of sulfur atoms, sodium atoms, potassium atoms, and calcium atoms contained in the positive electrode mixture can be adjusted by adjusting the conditions for the cleaning treatment and the neutralization treatment. Examples of the cleaning treatment include at least one of washing with water and cleaning with acid. For a neutralizing agent used for the neutralization treatment, for example, an inorganic base, such as ammonia and hydroxide, can be used.

Adjusting the conditions for firing can increase the crystallinity of the manganese dioxide and reduce the specific surface area of the electrolytic manganese dioxide. The BET specific surface area of the LiₓMnO₂ may be 5 m²/g or more and 40 m²/g or less. When the BET specific surface area of the LiₓMnO₂ is within the above range, the self-discharge is suppressed, and the deterioration in pulse discharge characteristics after storage can be further suppressed.

The BET specific surface area of the LiₓMnO₂ may be measured by a known method, and can be measured, for example, using a specific surface area meter (e.g., manufactured by Mountech Co., Ltd.), based on the BET method. For example, the LiₓMnO₂ separated from the positive electrode taken out from the battery is used as a measurement sample.

In an X-ray diffraction pattern of the LiₓMnO₂ obtained by X-ray diffractometry (XRD), a ratio I₁₁₀/I₁₀₁ of a diffraction peak intensity I₁₁₀ of the 110 plane to a diffraction peak intensity I₁₀₁ of the 101 plane may be 0.25 or more and 0.75 or less. The diffraction peak of the 101 plane is observed at or around the diffraction angle 20 = 37.3°. The diffraction peak of the 110 plane is observed at or around the diffraction angle 2θ = 28.7°. When the I₁₁₀/I₁₀₁ is within the above range, the self-discharge is suppressed, and the deterioration in pulse discharge characteristics after storage can be further suppressed. When an electrolytic manganese dioxide subjected to firing is used as the positive electrode active material, the I₁₁₀/I₁₀₁ can be adjusted by adjusting the firing conditions.

The median particle diameter of the LiₓMnO₂ may be 5 µm or more and 40 µm or less. When the median particle diameter is within the above range, the self-discharge is suppressed, and the deterioration in pulse discharge characteristics after storage can be further suppressed.

The median particle diameter of the LiₓMnO₂ is, for example, the median value of the particle size distribution determined by a quantitative laser diffraction and scattering method (qLD method). For example, the LiₓMnO₂ separated from the positive electrode taken out from the battery may be used as a measurement sample. For the measurement, for example, SALD-7500 nano manufactured by Shimadzu Corporation can be used.

The positive electrode mixture can contain a binder, in addition to the positive electrode active material and the sulfate. The positive electrode mixture may contain an electrically conductive agent.

Examples of the binder include fluorocarbon resins, rubber particles, and acrylic resins.

Examples of the conductive agent include conductive carbon materials. Examples of the conductive carbon materials include natural graphite, artificial graphite, carbon black, and carbon fibers.

The positive electrode can further include a positive electrode current collector that holds the positive electrode mixture . As the material of the positive electrode current collector, stainless steel, aluminum, titanium, and the like can be used.

When the battery is of a coin type, the positive electrode may be constituted by attaching a pellet of positive electrode mixture to a ring-like positive electrode current collector having an L-shaped cross section, or may be constituted of a pellet of positive electrode mixture only. The pellet of positive electrode mixture can be obtained by, for example, compression-molding a wet-state positive electrode mixture prepared by adding an appropriate amount of water to the positive electrode active material, the binder, and the like, and drying the molded mixture.

When the battery is of a cylindrical type, a positive electrode including a positive electrode current collector in the form of sheet, and a positive electrode mixture layer held on the positive electrode current collector can be used. As the positive electrode current collector in the form of sheet, a current collector with pores is preferred. Examples of the current collector with pores include expanded metal, net, and punched metal. The positive electrode mixture layer can be obtained by, for example, applying or packing the above wet-state positive electrode mixture onto a surface of a positive electrode current collector in the form of sheet or into a positive electrode current collector, applying a pressure thereto in the thickness direction, followed by drying.

The positive electrode preferably includes the current collector with pores as described above, and a positive electrode mixture packed into the current collector. In particular, a current collector containing at least one material selected from the group consisting of SUS444, SUS430, and SUS316 is preferred. By using such a current collector, the side reaction with the aforementioned nonaqueous electrolyte solution, and the corrosion of the current collector can be suppressed in the lithium primary battery, and the increase of internal resistance and the gas generation can be suppressed. Especially when such a current collector is combined with a nonaqueous electrolyte solution containing at least one of LiCF₃SO₃ and LiClO₄, which are typically used as a lithium salt in lithium primary batteries, the side reaction between the current collector and the nonaqueous electrolyte solution can be more effectively suppressed. The thickness of the positive electrode is, for example, 300 µm or more and 900 µm or less.

### (Negative electrode)

The negative electrode can include, for example, a lithium alloy in the form of foil (sheet). The lithium alloy is formed into optional shape and thickness, depending on the shape, size, and specified performance of the lithium primary battery.

When the battery is of a cylindrical type, the negative electrode may include a negative electrode current collector (e.g., copper foil) supporting the lithium alloy, but may be a lithium alloy in the form of foil (sheet) that does not include a negative electrode current collector. The negative electrode can be constituted without using a negative electrode current collector, by using only a lithium alloy in the form of foil (sheet), because when the lithium alloy contains Mg, the Mg, which has relatively high strength, will remain in the end stage of discharge. By using a lithium alloy containing Mg, it is possible to suppress the fracture or partial chipping of the negative electrode in the end stage of discharge when the negative electrode does not include a negative electrode current collector. The shape of the negative electrode (lithium alloy) is maintained even in the end stage of discharge, and the overall conductivity of the negative electrode can be ensured even when a negative electrode current collector is not used.

When the battery is of a coin shape, a lithium alloy punched out into a disc shape from a hoop-like lithium alloy may be used as the negative electrode. When the battery is of a cylindrical shape, a lithium alloy in the form of sheet may be used as the negative electrode. The sheet is obtained, for example, by extrusion molding. Specifically, in the cylindrical battery, a lithium alloy foil and the like having a shape with longitudinal and lateral directions can be used.

### (Nonaqueous electrolyte solution)

The nonaqueous electrolyte solution contains a nonaqueous solvent and a lithium salt dissolved as a solute in the nonaqueous solvent.

As the nonaqueous solvent, an organic solvent that can be generally used in the nonaqueous electrolyte solution for a lithium primary battery can be used. Examples of the nonaqueous solvent include an ether, an ester, and a carbonic acid ester. As the nonaqueous solvent, dimethyl ether, γ-butyrolactone, propylene carbonate, ethylene carbonate, 1,2-dimethoxyethane, and the like can be used. The nonaqueous electrolyte solution may contain these nonaqueous solvents singly or in combination of two or more kinds.

From the viewpoint of improving the discharge characteristics of the lithium primary battery, the nonaqueous solvent preferably contains a cyclic carbonic acid ester whose boiling point is high, and a chain ether which exhibits low viscosity even at low temperatures. The cyclic carbonic acid ester preferably includes at least one selected from the group consisting of propylene carbonate (PC) and ethylene carbonate (EC), of which PC is particularly preferred. The chain ether preferably has a viscosity of 1 mPa·s or less at 25 °C, and particularly preferably contains dimethoxyethane (DME). The viscosity of the nonaqueous solvent can be measured using a small sample viscometer m-VROC manufactured by RheoSense, Inc., in a 25 °C environment, at a shear rate of 10,000 (1/s).

As the lithium salt, for example, LiCF₃SO₃, LiClO₄, LiBF₄, LiPF₆, LiRaSO₃ where Ra is a fluorinated alkyl group having 1 to 4 carbon atoms, LiFSO₃, LiN(SO₂Rb)(SO₂Rc) where Rb and Rc are each independently a fluorinated alkyl group having 1 to 4 carbon atoms, LiN(FSO₂)₂, and the like can be used. The lithium salt may be used singly or in combination of two or more kinds.

The concentration of lithium ions (concentration of lithium salt) in the nonaqueous electrolyte solution is, for example, 0.2 mol/L or more and 2.0 mol/L or less, and may be 0.3 mol/L or more and 1.5 mol/L or less.

The nonaqueous electrolyte solution may contain an additive, as necessary. Examples of such an additive include phthalimide, a N-substituted phthalimide compound, dimethyl phthalate, a phthalic acid ester compound, propane sultone, and vinylene carbonate. The total concentration of such additives contained in the nonaqueous electrolyte solution is, for example, 0.003 to 5 mol/L.

### (Separator)

The lithium primary battery usually includes a separator interposed between the positive electrode and the negative electrode. As the separator, a porous sheet formed of an electrically insulating material having tolerance against the internal environment of the lithium primary battery may be used. Specific examples thereof include a nonwoven fabric made of a synthetic resin, a microporous film made of a synthetic resin, and a laminate of them.

Examples of the synthetic resin used for the nonwoven fabric include polypropylene, polyphenylene sulfide, and polybutylene terephthalate. Examples of the synthetic resin used for the microporous film include polyolefin resins, such as polyethylene, polypropylene, and ethylene-propylene copolymer. The microporous film may contain inorganic particles, as necessary.

The thickness of the separator is, for example, 5 µm or more and 100 µm or less.

The structure of the lithium primary battery is not particularly limited. The lithium primary battery may be a coin battery including a stacked electrode group constituted by stacking a disc-shaped positive electrode and a disc-shaped negative electrode, with a separator interposed therebetween. The lithium primary battery may be a cylindrical battery including a wound electrode group constituted by spirally winding a belt-shaped positive electrode and a belt-shaped negative electrode, with a separator interposed therebetween.

FIG. 1 is a front view, partially in section, of a lithium primary battery according to one embodiment of the present invention. In a lithium primary battery 10, an electrode group including a positive electrode 1 and a negative electrode 2 which are wound with a separator 3 interposed therebetween is housed together with a nonaqueous electrolyte solution (not shown), in a battery case 9. A sealing plate 8 is attached at the opening of the battery case 9. To the sealing plate 8, a positive electrode lead 4, which is connected to a current collector 1a of the positive electrode 1, is connected. A negative electrode lead 5, which is connected to the negative electrode 2, is connected to the battery case 9. On the upper and lower sides of the electrode group, an upper insulating plate 6 and a lower insulating plate 7 are respectively disposed for internal short circuit prevention.

### <<Supplementary notes>>

The above description of embodiments discloses the following techniques.

### (Technique 1)

A lithium primary battery, comprising:
a positive electrode, a negative electrode, and a nonaqueous electrolyte solution, wherein,
the positive electrode includes a positive electrode mixture,
the positive electrode mixture includes LiₓMnO₂ where 0 ≤ x ≤ 0.05, and a sulfate,
an amount of sulfur atoms contained in the positive electrode mixture is 1.6 parts by mass or less per 100 parts by mass of manganese atoms contained in the positive electrode mixture,
the negative electrode includes an alloy containing lithium and magnesium,
a content of the lithium in the alloy is more than 88 mass%, and
a content of the magnesium in the alloy is 0.01 mass% or more and 10 mass% or less.

### (Technique 2)

The lithium primary battery according to technique 1, wherein
the alloy contains aluminum, and
a total content of the magnesium and the aluminum in the alloy is 0.02 mass% or more and 10 mass% or less.

### (Technique 3)

The lithium primary battery according to technique 1 or 2, wherein
in an X-ray diffraction pattern of the LiₓMnO₂ obtained by X-ray diffractometry,
a ratio I₁₁₀/I₁₀₁ of a diffraction peak intensity I₁₁₀ of a (110) plane to a diffraction peak intensity I₁₀₁ of a (101) plane is 0.25 or more and 0.75 or less.

### (Technique 4)

The lithium primary battery according to any one of techniques 1 to 3, wherein a median particle diameter of the LiₓMnO₂ is 5 µm or more and 40 µm or less.

### (Technique 5)

The lithium primary battery according to any one of techniques 1 to 4, wherein a BET specific surface area of the LiₓMnO₂ is 5 m²/g or more and 40 m²/g or less.

### [Examples]

The present disclosure will be more specifically described below with reference to Examples and Comparative Examples. The present disclosure, however, is not limited to the following Examples.

### <<Batteries A1 to A16, Batteries B1 to B9>>

### (Production of positive electrode)

As a positive electrode, to 100 parts by mass of a positive electrode active material, 3 parts by mass of Ketjen black serving as a conductive agent, 5 parts by mass of polytetrafluoroethylene serving as a binder, and an appropriate amount of pure water were added and kneaded together, to prepare a wet-state positive electrode mixture. The positive electrode active material used here was an electrolytic manganese dioxide subjected to firing at 420 °C for 8 hours.

Next, the positive electrode mixture was packed into a positive electrode current collector formed from a 0.4-mm-thick expanded metal made of stainless steel (SUS444), to prepare a positive electrode precursor. Thereafter, the positive electrode precursor was dried, rolled with a roll press until the thickness reached 0.5 mm, and cut into a predetermined size, to obtain a positive electrode. Subsequently, a part of the packed positive electrode mixture was peeled off, and a positive electrode lead made of stainless steel was resistance welded to the exposed portion of the positive electrode current collector.

### (Production of negative electrode)

A lithium metal foil or lithium alloy foil (thickness 200 µm) was cut into a predetermined size, to obtain a negative electrode. One end of a negative electrode lead made of nickel was connected to a predetermined point on the negative electrode by ultrasonic welding. Other elements except Li contained in the lithium alloy foil were Mg and/or Al. The Mg content and the Al content in the lithium alloy foil were set to the values shown in Tables 1 and 2. The "-" in the column of Mg content (or Al content) in Tables 1 and 2 indicates that the amount of Mg (or amount of Al) was below the detection limit in a compositional analysis (ICP atomic emission spectroscopy, etc.).

### (Formation of electrode group)

An electrode group was formed by winding the positive electrode and the negative electrode, with a separator interposed therebetween. The separator used here was a 25-µm-thick microporous film made of polypropylene.

### (Preparation of nonaqueous electrolyte solution)

A nonaqueous solvent was prepared by mixing propylene carbonate (PC), ethylene carbonate (EC), and 1,2-dimethoxyethane (DME) in a volume ratio of 4:2:4. LiCF₃SO₃ was dissolved at a concentration of 0.5 mol/L in the nonaqueous solvent, to prepare a nonaqueous electrolyte solution.

### (Fabrication of lithium primary battery)

The electrode group was housed in a cylindrical battery case serving as a negative electrode terminal. The battery case used here was an iron case (outer diameter 17 mm, height 45.5 mm). Subsequently, the nonaqueous electrolyte solution was injected into the battery case, and then, the opening of the battery case was closed with a metal sealing plate serving as a positive electrode terminal. The other end of the positive electrode lead was connected to the sealing plate, and the other end of the negative electrode lead was connected to the inner bottom surface of the battery case. In this way, a cylindrical lithium primary battery was fabricated. The battery immediately after fabrication was discharged at 2.4 A for 2 minutes, and then aged for 7 days in a 45 °C atmosphere. The positive electrode active material after aging was expressed by the formula LiₓMnO₂ where the value x indicating the amount of doped lithium was in the range of 0 < x ≤ 0.05. In Table 1, batteries Al to A16 are of Examples, and batteries B1 to B9 in Table 2 are of Comparative Examples.

The amount of sulfate contained in the electrolytic manganese dioxide was adjusted by the conditions for the cleaning treatment and neutralization treatment during the production of the electrolytic manganese dioxide. In this way, the amount of sulfate ions (mass%) contained in the electrolytic manganese dioxide and the amount of sulfur atoms (parts by mass) contained in the positive electrode mixture, as determined by the aforementioned methods, were set to the values shown in Tables 1 and 2. The "amount of sulfur atoms contained in the positive electrode mixture" in the tables is the amount (parts by mass) per 100 parts by mass of manganese atoms contained in the positive electrode mixture.

There was a case where the metal Me (at least one of Na, K, and Ca) remained in the electrolytic manganese dioxide, and the total amount of metal Me atoms contained in the positive electrode mixture was 0.5 parts by mass or less per 100 parts by mass of manganese atoms contained in the positive electrode mixture.

The LiₓMnO₂ contained in the positive electrode mixture had a median particle diameter of 21 to 23 µm, and a BET specific surface area of 14 to 15 m²/g. The peak intensity ratio I₁₁₀/I₁₀₁ was 0.58.

### [Evaluation]

### (Internal resistance of battery after storage)

The battery after aging treatment was stored at 70 °C for 4 months. The internal resistance of the battery after storage was measured in a 20 °C environment.

### (Low-temperature pulse discharge test of battery after storage)

The battery after aging treatment was stored at 70 °C for 4 months. The battery after storage was left to stand in a -30 °C environment for 2 hours. Then, a 1-second pulse discharge was performed at 300 mA in a -30 °C environment. The lowest voltage at this time was determined as a pulse discharge voltage.

The evaluation results are shown in Tables 1 and 2. In Tables 1 and 2, the internal resistance is expressed as a relative value, with the internal resistance of the battery B3 taken as 100. The pulse discharge voltage is expressed as a relative value, with the pulse discharge voltage of the battery B3 taken as 100.

**[Table 1]**

| battery | amount of sulfate ions contained in electrolytic manganese dioxide (mass%) | amount of sulfur atoms contained in positive electrode mixture (pts. mass) | negative electrode | | | | evaluation | |
|---|---|---|---|---|---|---|---|---|
| | | | foil composition | Mg content (mass%) | Al content (mass%) | Al+Mg content (mass%) | internal resistance after storage (relative value) | pulse discharge voltage after storage (relative value) |
| A1 | 0.1 | 0.053 | Li-Mg | 0.5 | - | 0.5 | 85 | 115 |
| A2 | 0.5 | 0.27 | Li-Mg | 0.5 | - | 0.5 | 88 | 112 |
| A3 | 1 | 0.53 | Li-Mg | 0.5 | - | 0.5 | 90 | 110 |
| A4 | 3 | 1.6 | Li-Mg | 0.5 | - | 0.5 | 95 | 105 |
| A5 | 1 | 0.53 | Li-Mg | 0.01 | - | 0.01 | 95 | 105 |
| A6 | 1 | 0.53 | Li-Mg | 0.05 | - | 0.05 | 95 | 107 |
| A7 | 1 | 0.53 | Li-Mg | 0.2 | - | 0.2 | 93 | 109 |
| A8 | 1 | 0.53 | Li-Mg | 1 | - | 1 | 84 | 116 |
| A9 | 1 | 0.53 | Li-Mg | 2 | - | 2 | 77 | 123 |
| A10 | 1 | 0.53 | Li-Mg | 5 | - | 5 | 80 | 120 |
| A11 | 1 | 0.53 | Li-Mg | 10 | - | 10 | 92 | 108 |
| A12 | 1 | 0.53 | Li-Mg-Al | 0.01 | 0.01 | 0.02 | 91 | 108 |
| A13 | 1 | 0.53 | Li-Mg-Al | 0.1 | 0.1 | 0.2 | 89 | 111 |
| A14 | 1 | 0.53 | Li-Mg-Al | 1 | 1 | 2 | 76 | 124 |
| A15 | 1 | 0.53 | Li-Mg-Al | 2 | 2 | 4 | 78 | 122 |
| A16 | 1 | 0.53 | Li-Mg-Al | 5 | 5 | 10 | 87 | 113 |

**[Table 2]**

| battery | amount of sulfate ions contained in electrolytic manganese dioxide (mass%) | amount of sulfur atoms contained in positive electrode mixture (pts. mass) | negative electrode | | | | evaluation | |
|---|---|---|---|---|---|---|---|---|
| | | | foil composition | Mg content (mass%) | Al content (mass%) | Al+Mg content (mass%) | internal resistance after storage (relative value) | pulse discharge voltage after storage (relative value) |
| B1 | 0.1 | 0.053 | Li | - | - | - | 97 | 103 |
| B2 | 0.5 | 0.27 | Li | - | - | - | 99 | 101 |
| B3 | 1 | 0.53 | Li | - | - | - | 100 | 100 |
| B4 | 3 | 1.6 | Li | - | - | - | 108 | 92 |
| B5 | 1 | 0.53 | Li-Al | - | 1 | 1 | 98 | 102 |
| B6 | 4 | 2.2 | Li-Mg | 0.5 | - | 0.5 | 101 | 99 |
| B7 | 1 | 0.53 | Li-Mg | 12 | - | 12 | 101 | 99 |
| B8 | 1 | 0.53 | Li-Mg-Al | 8 | 4 | 12 | 98 | 102 |
| B9 | 1 | 0.53 | Li-Mg-Al | 4 | 8 | 12 | 104 | 96 |

In the batteries A1 to A16, which included a negative electrode including a lithium alloy having a Mg content of 0.01 to 10 mass%, and a positive electrode containing a positive electrode mixture in which the sulfur content was 1.6 parts by mass or less, excellent storage characteristics were obtained.

In the batteries B1 to B7, which included a negative electrode containing a lithium alloy or lithium metal having a Mg content outside the range of 0.01 to 10 mass%, and/or a positive electrode containing a positive electrode mixture in which the sulfur content was more than 1.6 parts by mass, the storage characteristics were deteriorated. In the batteries B8 and B9, which included a lithium alloy having a Li content of 88 mass% or less, the storage characteristics were deteriorated.

In the battery B5 in which a Li-Al foil (Al content: 1 mass%) was used, as compared to the battery B3 in which a Li foil was used, the amount of increase of the pulse discharge voltage after storage was very small (100 → 102). On the other hand, in the battery A8 in which a Li-Mg foil (Mg content: 1 mass%) was used, the pulse discharge voltage after storage was increased to 116, and in the battery A14 in which a Li-Mg-Al foil (Mg content: 1 mass%, Al content: 1 mass%) was used, the pulse discharge voltage after storage was 124, showing a much further increase as compared to the battery A8. The foregoing shows that the effect of improving the storage characteristics by the addition of Al can be remarkable when the lithium alloy contains Mg.

### <<Batteries A17 to A22>>

Batteries A17 to A22 were fabricated and evaluated in the same manner as the battery A3, except that the peak intensity ratio I₁₁₀/I₁₀₁ was adjusted to the values shown in Table 3 by appropriately adjusting the firing temperature within the range of 350 and 470 °C and the firing time within the range of 2 and 8 hours, in the firing of electrolytic manganese dioxide. The evaluation results are shown in Table 3. Table 3 also shows the results of the battery A3. In Table 3, the batteries A17 to A22 are of Examples.

**[Table 3]**

| battery | amount of sulfate ions contained in electrolytic manganese dioxide (mass%) | amount of sulfur atoms contained in positive electrode mixture (pts. mass) | peak intensity ratio I₁₁₀/I₁₀₁ of electrolytic manganese dioxide | negative electrode | | | | evaluation | |
|---|---|---|---|---|---|---|---|---|---|
| | | | | foil composition | Mg content (mass%) | Al content (mass%) | Al+Mg content (mass%) | internal resistance after storage (relative value) | pulse discharge voltage after storage (relative value) |
| A3 | 1 | 0.53 | 0.58 | Li-Mg | 0.5 | - | 0.5 | 90 | 110 |
| A17 | 1 | 0.53 | 0.26 | Li-Mg | 0.5 | - | 0.5 | 91 | 109 |
| A18 | 1 | 0.53 | 0.37 | Li-Mg | 0.5 | - | 0.5 | 88 | 112 |
| A19 | 1 | 0.53 | 0.42 | Li-Mg | 0.5 | - | 0.5 | 85 | 115 |
| A20 | 1 | 0.53 | 0.75 | Li-Mg | 0.5 | - | 0.5 | 91 | 109 |
| A21 | 1 | 0.53 | 0.24 | Li-Mg | 0.5 | - | 0.5 | 95 | 105 |
| A22 | 1 | 0.53 | 0.77 | Li-Mg | 0.5 | - | 0.5 | 95 | 105 |

All batteries exhibited excellent storage characteristics. In the batteries A3 and A17 to A20, in which the peak intensity ratio I₁₁₀/I₁₀₁ was 0.25 to 0.75, the storage characteristics were further improved.

### [Industrial Applicability]

The lithium primary battery of the present disclosure is suitably applicable, for example, as a main power source for various meters (e.g., smart meters for electricity, water, gas, etc.) and a memory backup power source.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 1: positive electrode
- 1a: positive electrode current collector
- 2: negative electrode
- 3: separator
- 4: positive electrode lead
- 5: negative electrode lead
- 6: upper insulating plate
- 7: lower insulating plate
- 8: sealing plate
- 9: battery case
- 10: lithium primary battery

## Claims

1. A lithium primary battery, comprising:
a positive electrode, a negative electrode, and a nonaqueous electrolyte solution, wherein,
the positive electrode includes a positive electrode mixture,
the positive electrode mixture includes LiₓMnO₂ where 0 ≤ x ≤ 0.05, and a sulfate,
an amount of sulfur atoms contained in the positive electrode mixture is 1.6 parts by mass or less per 100 parts by mass of manganese atoms contained in the positive electrode mixture,
the negative electrode includes an alloy containing lithium and magnesium,
a content of the lithium in the alloy is more than 88 mass%, and
a content of the magnesium in the alloy is 0.01 mass% or more and 10 mass% or less.

2. The lithium primary battery according to claim 1, wherein
the alloy contains aluminum, and
a total content of the magnesium and the aluminum in the alloy is 0.02 mass% or more and 10 mass% or less.

3. The lithium primary battery according to claim 1, wherein
in an X-ray diffraction pattern of the LiₓMnO₂ obtained by X-ray diffractometry,
a ratio I₁₁₀/I₁₀₁ of a diffraction peak intensity I₁₁₀ of a (110) plane to a diffraction peak intensity I₁₀₁ of a (101) plane is 0.25 or more and 0.75 or less.

4. The lithium primary battery according to claim 1, wherein
a median particle diameter of the LiₓMnO₂ is 5 µm or more and 40 µm or less.

5. The lithium primary battery according to claim 1, wherein
a BET specific surface area of the LiₓMnO₂ is 5 m²/g or more and 40 m²/g or less.
